# EUROPÄISCHE PATENTSCHRIFT

(11) **EP 3 101 289 B1**
(45) Veröffentlichungstag und Bekanntmachung des Hinweises auf die Patenterteilung: **01.08.2018**
(21) Anmeldenummer: 15170326.1
(22) Anmeldetag: 02.06.2015
(51) Int. Cl.: F16B 39/02, F16K 17/00

(54) **SCHRAUBVERBINDUNG UND VERFAHREN ZUM HERSTELLEN EINER VERDREHSICHERUNG IN EINER SCHRAUBVERBINDUNG**
SCREW CONNECTION AND METHOD FOR PRODUCING AN ANTI-TWIST DEVICE IN A SCREW CONNECTION
RACCORD À VIS ET PROCÉDÉ DE PRODUCTION D'UNE SÉCURITÉ ANTI-ROTATION DANS UN RACCORD À VIS

(43) Veröffentlichungstag der Anmeldung: 07.12.2016
(73) Patentinhaber: HAWE Hydraulik SE, 85609 Aschheim (DE)
(72) Erfinder: Marx, Steffen, 81243 München (DE); Weber, Kilian, 81539 München (DE)
(74) Vertreter: Grosse Schumacher Knauer von Hirschhausen

(56) Entgegenhaltungen:
- EP-A1- 0 639 728
- EP-A2- 0 473 874
- DE-T2- 69 504 765

## Beschreibung

Die Erfindung betrifft eine Schraubverbindung gemäß Oberbegriff Patentanspruch 1 und ein Verfahren zum Herstellen einer Verdrehsicherung in einer Schraubverbindung gemäß Oberbegriff Patentanspruch 5. Dynamischen Belastungen und Lastwechseln unterliegende Schraubverbindungen werden häufig durch eine Verdrehsicherung gegen ungewolltes Lösen gesichert. Dies kann durch eine Kontermutter und/oder durch Verstemmen von Gewindegängen, und/oder durch Verkleben und/oder Schweißen erfolgen. Zum Schweißen oder Löten werden in der Praxis Autogen-, Elektro-, Schutzgas-, Schweiß- oder Lötverfahren angewendet. Bei der Herstellung von Hydraulikbauteilen sind solche Schweiß- oder Lötverfahren jedoch wegen unvermeidlicher Schweißspritzer, Schweißperlen und dergleichen ungeeignet.

Aus der Druckschrift D6920 "Stromregelventile Typ SB und SQ", Januar 2007-01, der Firma HAWE Hydraulik SE, Streitfeldstraße 25, 81673 München, Deutschland, Seite 5, ist es bekannt, nach Einstellen einer bestimmten Einstelllänge einer Vorspannfeder zum Erzielen einer gewünschten Kennlinie eines Stromregelventils, die Einstelllänge dadurch festzulegen, dass eine Einstellmutter für ein Federwiderlager durch eine auf demselben Gewindebolzen verschraubte Kontermutter dauerhaft festgelegt wird. Die Einstellung der Kennlinie erfolgt z. B. herstellerseitig in einem Prüfstand mit Simulieren des Betriebs mit Hydrauliköl unter Druck. Dies bedingt aber, dass die Gewindegänge und die Muttern mit dem Hydrauliköl benetzt sind, wenn die Einstellung vorgenommen wird. Die Praxis hat jedoch gezeigt, dass dann die Kontermutter nicht ausreichend zuverlässig ist, sondern unter dynamischen Belastungen oder Lastwechseln zum Lösen neigt, schließlich bis zur Funktionsunfähigkeit des Ventils. Deshalb wird in der Praxis nach dem Anziehen der Kontermutter mit diametralen Pressstempeln das Gewinde des Gewindebolzens angrenzend an die Kontermutter bewusst beschädigt, und so ein Lösen der Kontermutter zuverlässig ausschließt. Dies ist jedoch werkzeugtechnisch aufwändig.

Bei einer aus DE 69504765 T2 bekannten Schraubverbindung aus einer einen Außengewindeabschnitt aufweisenden Hülse und einer auf dem Außengewinde gegen eine Vorspannfeder geschraubten Mutter besteht die Verdrehsicherung dieser Gewinde-Schraubverbindung aus einer zwischen einer Stirnseite der Mutter und freiliegenden Gewindegängen des Außengewindeabschnitts gebildeten Schweißraupe. Zwischen den ineinandergreifenden Gewindegängen der Mutter und des Außengewindeabschnitts ist keine Verdrehsicherung vorgesehen. Die Bildung dieser Schweißnaht in der Umfangskehle an der Außenseite der Mutter erfordert die Verwendung von Fremdmaterial und ist zwangsweise mit der Entstehung von Schweißspritzern und Schweißperlen verbunden. Außerdem ist es fraglich, ob die Schweißraupe eine ausreichend feste Haftung einzugehen vermag, falls die Stirnseite der Mutter und/oder die freiliegenden Gewindegänge außerhalb der Schraubverbindung mit Hydrauliköl oder einem anderen Substrat benetzt sind.

Bei einem aus EP 0639728 A1 bekannten Torsionsschwingungsdämpfer ist an einem metallischen Teller eine Keilriemenscheibe stirnseitig und in einem Durchgang des Tellers eine Hülse jeweils durch Widerstandsimpulsschweißen festgelegt. Der so gestaltete Torsionsschwingungsdämpfer weist keine Schraubverbindung auf.

Aus EP 0473874 A2 ist eine Verdrehsicherung einer Schraubverbindung eines elektromagnetischen Stellgliedes einer Drosselklappe eines Verbrennungskraftmotors bekannt. Die Verdrehsicherung erfolgt dadurch, dass im Inneren der Schraubverbindung durch einen speziell dafür geformten Durchgang zumindest eine lokale Gewindegang-Deformation durch Anschmelzen mittels eines Laserstrahls erzeugt wird. Aufgrund von Deformationen ineinandergreifender Innen- und Außengewinde bleibt die Schraubverbindung darauf verdrehgesichert, ohne die Gewindegänge miteinander zu verschweißen.

Der Erfindung liegt die Aufgabe zugrunde, eine Schraubverbindung sowie ein Verfahren zum Herstellen einer Verdrehsicherung in einer Schraubverbindung anzugeben, die herstellungstechnisch einfach, kostengünstig und im Betrieb zuverlässig sind.

Die gestellte Aufgabe wird mit den Merkmalen des Patentanspruchs 1 und des Patentanspruchs 5 gelöst.

Die durch die Widerstandsschweißung zwischen Gewindegängen der Maschinenelemente gebildete Verdrehsicherung ist herstellungstechnisch einfach, kostengünstig und im späteren Betrieb außerordentlich zuverlässig, da kein Schweiß- oder Löt-Fremdmaterial eingesetzt, sondern nur das Material der Maschinenelemente ohne nennenswerte Versprödungs- oder Kerbwirkungsgefahr verschweißt wird, wobei keine Spritzer oder Perlen entstehen.

Bei dem Verfahren zum Herstellen der Verdrehsicherung wird durch die äußere Kraft bewusst gegenseitiger Anpresskontakt zwischen Gewindegängen hergestellt, z. B. eine unerwünschte Lichtbogenentwicklung zu unterdrücken und eine homogene Widerstandsschweißung durchzuführen. Diese äußere Kraft kann für den Schweißvorgang extra aufgebracht werden, oder ist verfahrensbedingt beispielsweise durch eine Vorspannfeder, oder durch eine Anzugsspannung entweder gegen eine Federvorspannung oder zwischen einer Einstellmutter und einer Kontermutter gegeben, oder durch eine Schweißelektrode.

Bei einer zweckmäßigen Ausführungsform der Schraubverbindung sind die widerstandsverschweißten Maschinenelemente ein Gewindebolzen und eine Kontermutter für eine Einstellmutter, oder auch die Kontermutter und die Einstellmutter, oder nur die Einstellmutter. Aufgrund der hohen Zuverlässigkeit der Verdrehsicherung durch die Widerstandsschweißung nämlich die Kontermutter für die Einstellmutter sogar weg gelassen und nur die Einstellmutter verdrehgesichert sein.

In einer weiteren Ausführungsform eines Hydraulikbauteils stützt die Einstellmutter ein Federwiderlager einer Vorspannfeder oder ein Ende der Vorspannfeder selbst am Gewindebolzen ab, so dass durch die Widerstandsschweißung eine eingestellte Federvorspannung dauerhaft festgelegt ist. Besonders zweckmäßig ist die eingestellte Federvorspannung durch die Widerstandsschweißung zwischen den Maschinenelementen in einem Hydraulikbauteil dauerhaft festgelegt, das zumindest ein Senkbremsventil oder Schlauchbruchventil mit einer eine Betriebskennlinie bestimmenden Vorspannfeder ist.

Verfahrensgemäß wird beim Herstellen der Verdrehsicherung die Schraubverbindung vor dem Widerstandsschweißen durch Verschrauben wenigstens eines Maschinenelements relativ zu einem anderen in eine Sollposition eingestellt und wird die Sollposition nachfolgend durch die Widerstandsschweißung gesichert.

Wenn die Schraubverbindung, vorzugsweise einschließlich ineinandergreifender Gewindegänge, in Verbindung mit dem Einstellen der Sollposition mit wenigstens einem flüssigen Medium benetzt wird und/oder beschichtet ist, hat dies auf die Verdrehsicherung durch das Widerstandsschweißen keinen nachteiligen Einfluss. Dieses Medium ist beispielsweise Hydrauliköl, mit dem der Betrieb des Hydraulikbauteils zur Einstellung der Sollposition simuliert wird, oder ist aus dem Herstellverfahren der Maschinenelemente resultierender Kühlschmierstoff, der aufgrund der Zuverlässigkeit und Unempfindlichkeit der Widerstandsschweißung zuvor nicht mehr entfernt zu werden braucht. Da die Widerstandsschweißung keine Schweißspritzer, keinen Lichtbogen und keine Schweißperlen erzeugt, die in dem Hydrauliköl verbleiben oder sich in dem Hydraulikbauteil ansetzen können, ist die Widerstandsschweißung ein optimales Verfahren zur Verdrehsicherung solcher Schraubverbindungen.

Verfahrensgemäß kann die äußere Kraft zum lokalen Anpressen der Gewindegänge beim Widerstandsschweißen auf wenigstens ein Maschinenelement durch wenigstens eine Schweißelektrode und/oder einen Pressstempel und/oder durch eine zwischen den Maschinenelemente ohnedies wirkende Vorspannkraft, vorzugsweise eine Vorspannfeder, und/oder durch die Anzugsspannung entweder gegen eine Vorspannfeder oder zwischen einer Kontermutter und einer Einstellmutter erzeugt sein.

Die Erfindung wird nachfolgend anhand der Zeichnung erläutert. Es zeigen:
- Fig. 1: eine schematische Schnittdarstellung einer Schraubverbindung mit Verdrehsicherung,
- Fig. 2: eine Detailvariante zu Fig. 1,
- Fig. 3: einen Hydraulikbauteil mit einer Schraubverbindung mit Verdrehsicherung, und
- Fig. 4: eine Detailvariante des Hydraulikbauteils, jeweils in einer Seitenansicht.

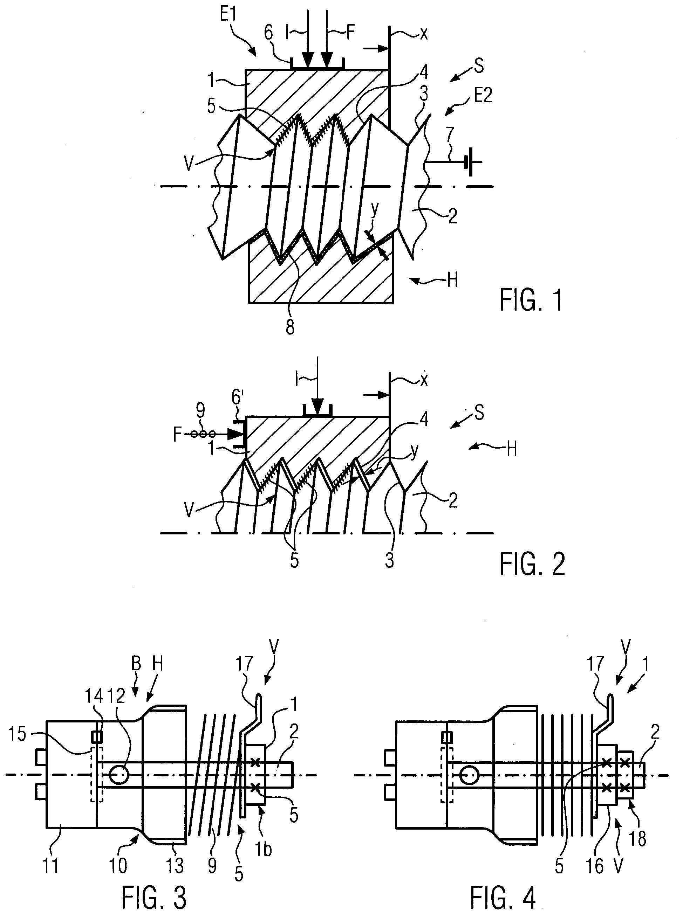

Eine Schraubverbindung S in Fig. 1 besteht aus zwei relativ zueinander verschraubbaren Maschinenelementen E1, E2 aus einem leitfähigen Metall, z. B. Stahl oder dergleichen. Das Maschinenelement E2 kann ein Gewindebolzen 2 mit Gewindegängen 3 sein. Das Maschinenelement E1 kann eine Einstell- oder Kontermutter 1 mit Gewindegängen 4 sein. Die Gewindegänge 3, 4 greifen ineinander und sind durch eine Verdrehsicherung V in Form einer zumindest lokalen Widerstandsschweißung 5 verdrehgesichert.

Zum Herstellen der Widerstandsschweißung 5 wird beispielsweise ein Pressstempel oder eine Schweißelektrode 6 in etwa radial auf das Maschinenelement E1, hier die Mutter 1, aufgebracht, nachdem diese auf dem Gewindebolzen 2 in eine Sollposition X verschraubt wurde. Durch die über den Stempel oder die Elektrode 6 aufgebrachte, äußere Kraft F werden die Gewindegänge 3, 4 an der Einwirkseite der Kraft F in zumindest lokalen Anpresskontakt gebracht, während die Widerstandsschweißung erzeugt wird. Dabei können die Gewindegänge 3, 4 an der gegenüberliegenden Seite mit dem üblichen Gewindespiel Y voneinander abgehoben sein. Im Übrigen können die Gewindegänge 3, 4 mit einem flüssigen Medium 8 (gepunktet angedeutet) benetzt sein, wie beispielsweise Hydrauliköl und/oder aus der Herstellung der Maschinenelemente resultierendem Kühlschmierstoff. Zur Herstellung der Widerstandsschweißung 5 wird ein Strom I aufgebracht, wobei eine zweite Elektrode 7 entweder am Gewindebolzen 2 oder der Mutter 1 angebracht ist.

In der Ausführungsform der Verdrehsicherung V der Schraubverbindung S, beispielsweise eines Hydraulikbauteils H, in Fig. 2, wird die Kraft F in Axialrichtung des Gewindebolzens 2 aufgebracht, entweder durch einen Pressstempel oder eine Elektrode 6' und/oder eine Vorspannfeder 9, um die Gewindegänge 3, 4 zumindest jeweils mit in Anpresskontakt tretenden Flanken aneinander zu pressen, und dann durch den Strom I dort die Widerstandsschweißung 5 erzeugt.

Die Widerstandsschweißung 5 kann nur lokal begrenzt erzeugt werden, oder verteilt auf mehrere Gewindegangbereiche. In Fig. 2 kann die Vorspannkraft F auch aus der Anzugsspannung zwischen den Maschinenelementen, hier der Mutter 1 und dem Gewindebolzen 2, resultieren, die zumindest während der Widerstandsschweißung aufrecht bleibt.

Fig. 3 verdeutlicht einen Hydraulikbauteil H in Form beispielsweise eines Senkbremsventils oder Schlauchbruchventils als Einschraubpatrone zum Unterbringen in einer Gehäusebohrung. Das Senkbremsventil B oder Schlauchbruchventil weist ein Einschraubgehäuse 11 mit wenigstens einer Durchströmöffnung 12 angrenzend an einen im Durchmesser vergrößerten Außengewindeabschnitt 13 auf. Im Inneren des Endes 11 des Einschraubgehäuses 10 ist beispielsweise eine Schubblende 14 mit einer Blendenöffnung 15 mit dem Gewindebolzen 2 verbunden. Die Schubblende 14 ist im Einschraubgehäuse 10 begrenzt axial verschiebbar. Der Gewindebolzen 2 stützt sich über die Schraubverbindung S an einer Vorspannfeder 9 ab, deren anderes Ende am Einschraubgehäuse 10 anliegt.

Die Schraubverbindung besteht in Fig. 3 aus dem Gewindebolzen 2 und nur einer Einstellmutter 16, die die Sollposition eines Federwiderlagers 17 in Bezug auf das Einschraubgehäuse auf dem Gewindebolzen festlegt und die Sollposition ist für die Kennlinie des Ventils B maßgeblich. Die Einstellmutter 16 ist mittels der Widerstandsschweißung 5 der Verdrehsicherung V auf dem Gewindebolzen 2 dauerhaft festgelegt, derart, dass die Verdrehsicherung die eingestellte Vorspannung der Vorspannfeder 9 sichert.

In der Ausführungsform in Fig. 4 ist im Wesentlichen das gleiche Senkbremsventil oder Schlauchbruchventil B, beispielsweise wiederum als Einschraubpatrone, dargestellt. Die Schraubverbindung besteht hier aus dem Gewindebolzen 2, der Einstellmutter 16 für das Federwiderlager 17 und einer Kontermutter 18 zum Kontern der Einstellmutter 16 nach Einstellen der Sollposition des Federwiderlagers 17. In der Ausführungsform in Fig. 4 ist zweckmäßig die Verdrehsicherung V in Form der Widerstandsschweißung 5 nur zwischen dem Gewindebolzen 2 und der Kontermutter 18, analog zur Mutter 1 in den Fig. 1 und 2, vorgesehen. Sicherheitshalber könnte jedoch zusätzlich auch die Einstellmutter 16 eine Verdrehsicherung V in Form der Widerstandsschweißung 5 aufweisen.

Das in den Fig. 3 und4 gezeigte Hydraulikbauteil in Form des Senkbremsventils oder Schlauchbruchventils B ist nur als nicht beschränkendes Beispiel zu verstehen. Das Prinzip der Verdrehsicherung V durch eine Widerstandsschweißung 5 zwischen Maschinenelementen einer einstellbaren Schraubverbindung Saus leitfähigem Metall ist bei anderen, einstellbaren Hydraulikbauteilen ebenso zweckmäßig, wie auf anderen Gebieten der Technik, und zwar in Fällen, in welchen Schweißspritzer, Schweißperlen nicht tolerierbar sind, eine Benetzung der Maschinenelemente in der Schraubverbindung mit öligen oder anderen flüssigen Medien nicht ausgeschlossen werden kann, die eine nur reibschlüssige Verdrehsicherung gefährden könnten, und bei denen eine herstellungstechnisch einfache, aber zuverlässige und gleich vor Ort erzeugbare Verdrehsicherung gefordert ist.

Die Erfindung lässt sich z. B. für Gewinde von M1 bis etwa M18 einsetzen. Die Oberflächen der Maschinenelemente können dabei blank sein oder eine Beschichtung tragen. Die Widerstandsschweißung wird z. B. bei Stahl in Leistungsklassen von 16 bis 630 VA ausgeführt.

## Patentansprüche

1. Schraubverbindung (S) aus elektrisch leitfähigen Maschinenelementen (E1, E2), insbesondere eines Hydraulikbauteils (H), mit einer Verdrehsicherung (V) zwischen den Maschinenelementen, **dadurch gekennzeichnet, dass** die Verdrehsicherung (V) wenigstens eine aus dem Material der Maschinenelemente (E1, E2) gebildete Widerstandsschweißung (5) zwischen Flanken ineinandergreifender Gewindegänge (3, 4) der Maschinenelemente (E1, E2) ist.

2. Schraubverbindung nach Anspruch 1, **dadurch gekennzeichnet, dass** die jeweils durch die Widerstandsschweißung (5) verdrehgesicherten Maschinenelemente (E1, E2) ein Gewindebolzen (2) und eine Kontermutter (18) für eine Einstellmutter (16), auch die Einstellmutter (16) oder nur die Einstellmutter (16) umfassen.

3. Schraubverbindung nach Anspruch 2, **dadurch gekennzeichnet, dass** die Einstellmutter (16) ein Federwiderlager (17) einer Vorspannfeder (9) oder ein Ende der Vorspannfeder (9) selbst am Gewindebolzen (2) abstützt.

4. Schraubverbindung nach wenigstens einem der Ansprüche 1 bis 3, **dadurch gekennzeichnet, dass** die Widerstandsschweißung (5) eine über die Schraubverbindung (S) eingestellte Federvorspannung in dem zumindest als Senkbremsventil (B) oder Schlauchbruchventil ausgebildeten Hydraulikbauteil festlegt.

5. Verfahren zum Herstellen einer Verdrehsicherung (V) in einer Schraubverbindung (S) aus elektrisch leitfähigen Maschinenelementen (E1, E2), insbesondere eines Hydraulikbauteils (H), **dadurch gekennzeichnet, dass** auf zumindest ein Maschinenelement (E1, E2) eine ineinandergreifende Gewindegänge (3, 4) zumindest lokal mit ihren Flanken in Anpresskontakt bringende Kraft (F) aufgebracht wird, und dass die Flanken der Gewindegänge (3, 4) unter zumindest weitgehendem Aufrechthalten des Anpresskontakts durch Widerstandsschweißen des Materials der Maschinenelemente (E1, E2) aneinander geschweißt werden.

6. Verfahren nach Anspruch 5, **dadurch gekennzeichnet, dass** die Schraubverbindung (S) vor dem Widerstandsschweißen durch Verschrauben wenigstens eines Maschinenelements (E1, E2) in eine Sollposition (X) eingestellt und nach Einstellen der Sollposition widerstandsgeschweißt wird.

7. Verfahren nach einem der Ansprüche 5 und 6, **dadurch gekennzeichnet, dass** Oberflächen der Schraubverbindung (S), vorzugsweise einschließlich ineinandergreifender Gewindegänge (3, 4), zumindest in Verbindung mit dem Einstellen der Sollposition (X) eines Maschinenelements (E1, E2) und vor dem Widerstandsschweißen mit wenigstens einem flüssigen Medium (8) benetzt und/oder beschichtet werden.

8. Verfahren nach Anspruch 5, **dadurch gekennzeichnet, dass** die Kraft (F) beim Widerstandsschweißen auf wenigstens ein Maschinenelement (E1, E2) durch wenigstens eine Schweißelektrode (6), und/oder einen Pressstempel (6') und/oder eine Vorspannkraft, vorzugsweise eine zwischen den Maschinenelementen (E1, E2) wirkende Vorspannfeder (9), oder eine Gewinde-Anzugsspannung erzeugt wird.

9. Verfahren nach Anspruch 5, **dadurch gekennzeichnet, dass** das als Senkbremsventil (B) oder Schlauchbruchventil ausgebildete Hydraulikbauteil (H) in einem Prüfstand mit Simulieren eines Betriebs mit Hydrauliköl unter Druck eingestellt wird, wobei die Einstellung an der Schraubverbindung (S) vorgenommen und die Schraubverbindung (S) durch Widerstandsverschweißen von Flanken ineinandergreifender Gewindegänge (3, 4) verdrehgesichert wird.

## Claims

1. A screwed connection (S) of electrically conductive machine elements (E1, E2), especially of a hydraulic member (H), with anti-rotation protection (V) between the machine elements, **characterized in that** the anti-rotation protection (V) is at least one resistance welding (5) between flanks of engaging thread pitches (3, 4) of the machine elements (E1, E2) formed of the material of the machine elements (E1, E2).

2. The screwed connection according to claim 1, **characterized in that** the machine elements (E1, E2) that are each secured against rotation by the resistance welding (5) comprise a threaded bolt (2) and a lock nut (18) for a register nut (16), also the register nut (16) or only the register nut (16).

3. The screwed connection according to claim 2, **characterized in that** the register nut (16) supports a spring abutment (17) of a biasing spring (9) or one end of the biasing spring (9) itself on the threaded bolt (2).

4. The screwed connection according to at least one of claims 1 to 3, **characterized in that** the resistance welding (5) sets a spring preload adjusted via the screwed connection (S) in the hydraulic member that is at least configured as a load-lowering valve (B) or hose burst valve.

5. A method of generating anti-rotation protection (V) in a screwed connection (S) of electrically conductive machine elements (E1, E2), especially of a hydraulic member (H), **characterized in that** a force (F) pressing together engaging thread pitches (3, 4) at least locally with its flanks is applied to one machine element (E1, E2) and that the flanks of the thread pitches (3, 4) are welded together by resistance welding of the material of the machine elements (E1, E2) by at least largely maintaining the contact pressure.

6. The method according to claim 5, **characterized in that** the screwed connection (S) is adjusted by screwing at least one machine element (E1, E2) into a required position (X) before resistance welding and is resistance-welded after the required position has been adjusted.

7. The method according to any of claims 5 and 6, **characterized in that** surfaces of the screwed connection (S), preferably including engaging thread pitches (3, 4), are wetted and/or coated with at least one liquid medium (8) at least in connection with adjusting the required position (X) of a machine element (E1, E2) and before resistance welding.

8. The method according to claim 5, **characterized in that** the force (F) is generated in resistance welding to at least one machine element (E1, E2) by at least one welding electrode (6) and/or a plunger (6') and/or a biasing force, preferably a biasing spring (9) acting between the machine elements (E1, E2) or a thread tightening tension.

9. The method according to claim 5, **characterized in that** the hydraulic member (H) configured as a load-lowering valve (B) or hose burst valve is adjusted in a test bench by simulating an operation with hydraulic oil under pressure, wherein the adjustment is performed on the screwed connection (S) and the screwed connection (S) is secured against rotation by resistance welding of flanks of engaging thread pitches (3, 4).

## Revendications

1. Raccord vissé (S) de pièces mécaniques conducteurs électriques (E1, E2), en particulier d'un composant hydraulique (H), comportant une sécurité anti-rotative (V) entre les pièces mécaniques, **caractérisé en ce que** la sécurité anti-rotative (V) est au moins un soudage par résistance (5) formé à partir du matériau des pièces mécaniques (E1, E2) entre les flancs des filets (3, 4) en engrènement des pièces mécaniques (E1, E2).

2. Raccord vissé selon la revendication 1, **caractérisé en ce que** les pièces mécaniques (E1, E2) comportant une sécurité anti-rotative au moyen du soudage par résistance (5) comprennent, respectivement, un boulon fileté (2) et un contre-écrou pour un écrou d'ajustage (16), également l'écrou d'ajustage (16), ou seulement l'écrou d'ajustage (16).

3. Raccord vissé selon la revendication 2, **caractérisé en ce que** l'écrou d'ajustage (16) est destiné à contrebuter, sur le boulon fileté (2), un contre-appui (17) d'un ressort de sollicitation (9) ou l'extrémité propre du ressort de sollicitation.

4. Raccord vissé selon l'une quelconque des revendications 1 à 3, **caractérisé en ce qu'**une force de sollicitation du ressort, cette force ayant été ajustée par le raccord vissé (S), est fixée au moyen de soudure par résistance (5), dans le composant hydraulique qui est réalisé au moins en tant que valve de descente freinée (B) ou clapet de sécurité en cas de rupture de conduit.

5. Procédé de formation d'une sécurité anti-rotative (V) pour un raccord vissé (S) de pièces mécaniques conducteurs électriques (E1, E2), en particulier d'un composant hydraulique (H), **caractérisé en ce qu'**une force (F) est appliquée sur au moins un des pièces mécaniques (E1, E2), cette force causant que des filets (3, 4) en engrènement sont au moins localement mises en contact de pression, et que les flancs des filets (3, 4) sont soudés entre eux au moyen d'un soudage par résistance à partir du matériau des pièces mécaniques (E1, E2), tout en maintenant en grande partie le contact de pression.

6. Procédé selon la revendication 5, **caractérisé en ce que,** avant l'exécution de la soudure par résistance, on ajuste le raccord vissé (S) à une position souhaitée (X) par vissage d'au moins une pièce mécanique (E1, E2) et, après que cet ajustement à une position souhaitée a été accompli, on effectue une soudure par résistance.

7. Procédé selon l'une quelconque des revendications 5 et 6, **caractérisé en ce qu'**on soumet les surfaces du raccord vissé (S), de préférence également des filets (3, 4) en engrènement, au moins en ce qui concerne ledit ajustement à la position souhaitée (X) d'un pièce mécanique (E1, E2) et avant l'exécution de la soudure par résistance, à un mouillage ou à une revêtement par au moins un milieu liquide (8).

8. Procédé selon la revendication 5, **caractérisé en ce qu'**il y est générée, lors de la soudure par résistance, la force (F) sur au moins un pièce mécanique (E1, E2) par au moins une électrode de soudage (6) et/ou un piston presseur (6'), et/ou une force de sollicitation, de préférence au moyen d'un ressort de sollicitation (9) opérant entre les pièces mécaniques (E1, E2), ou une force de serrage de filet.

9. Procédé selon la revendication 5, **caractérisé en ce que** l'ajustement du composant hydraulique (H), réalisé en tant que valve de descente freinée (B) ou clapet de sécurité en cas de rupture de conduit, est effectué sur un banc d'essai en simulant une opération avec huile hydraulique sous pression, et lors de cela on exécute l'ajustement du raccord vissé (S) et on produit la sécurité anti-rotative du raccord vissé (S) au moyen d'un soudage par résistance entre les flancs des filets (3, 4) en engrènement.
